(19) Europäisches Patentamt
European Patent Office
Office européen des brevets

(11) **EP 4 535 281 A1**

(12) **EUROPEAN PATENT APPLICATION**

(43) Date of publication:
**09.04.2025 Bulletin 2025/15**

(21) Application number: **23207885.7**

(22) Date of filing: **06.11.2023**

(51) International Patent Classification (IPC):
**G06T 5/94** *(2024.01)* **H04N 1/60** *(2006.01)*
**G09G 5/10** *(2006.01)*

(52) Cooperative Patent Classification (CPC):
**H04N 1/6088; G09G 5/10;** G09G 2320/0626;
G09G 2320/066; G09G 2360/16

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.10.2023 US 202363588077 P**

(71) Applicant: **Dolby Laboratories Licensing
Corporation
San Francisco, CA 94103 (US)**

(72) Inventor: **PYTLARZ, Jaclyn Anne
San Francisco, CA 94103 (US)**

(74) Representative: **Dolby International AB
Patent Group Europe
77 Sir John Rogerson's Quay
Block C
Grand Canal Docklands
Dublin, D02 VK60 (IE)**

(54) **LOCAL AMBIENT COMPENSATION SYSTEMS AND METHODS**

(57) Novel methods and systems for locally adapting (modifying) an image to compensate for ambient conditions is realized. An adjusted cone response determining based on a minimum target cone response and a delta cone response. A target luminance is then calculated from a local adaptation pooling and the adjusted cone response. Then the image is modified by the target luminance to produce an adapted image.

FIG. 5

EP 4 535 281 A1

**Description**

CROSS-REFERENCE TO RELATED APPLICATIONS

This application claims the benefit of priority from U.S. Provisional Application No. 63/588,077, filed on 5 October 2023, which is incorporated by reference herein in its entirety.

TECHNICAL FIELD

The present disclosure relates to improvements for viewing images/video on screens. More particularly, it relates to methods and systems for compensating for local ambient conditions that alter how images/videos being displayed are viewed by the user.

BACKGROUND

Video and image displays (screens or projections) present digital image content with the contrast set by the content creator. Brightness and contrast can be manually adjusted by the display owner to overcome environmental effects that change the brightness and contrast for a given display (such as ambient lighting, viewing angle and distance, eye condition, etc.), but it is difficult to determine what settings match what the content creator originally intended, and overall brightness adjustments can cause oversaturation in areas that are already very bright.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section. Similarly, issues identified with respect to one or more approaches should not assume to have been recognized in any prior art on the basis of this section, unless otherwise indicated.

SUMMARY

A screen for a display device (movie projector, television, computer monitor, smartphone, tablet computer, etc.) displays images by illuminating pixels at a fixed range of luminance according to the data provided for the image (e.g., 0 to 255).

Image and video content is typically coded to have luminance levels that assume ideal viewing conditions. In reality, the conditions are not ideal, particularly for devices that are used in brightly lit areas (e.g., outdoors), but other conditions can also affect the viewing experience, such as viewer age, eye condition, viewing angle, etc.

Being able to compensate for those conditions can improve the viewing experience and present the images in a condition close to what was originally intended, in terms of brightness and contrast.

An embodiment of the present invention is a method to modify an image displayed for a user on a target device in target surround conditions, said method comprising: determining an adjusted cone response based on a minimum target cone response and a delta cone response; calculating a target luminance from a local adaptation pooling and the adjusted cone response; and modifying the image by the target luminance to produce an adapted image.

A further embodiment of the present invention is a method for adjusting a target image to be viewed by a user comprising: modeling a target surround with the target image; modeling glare being added to the target image by a point spread function of an eye of the user; calculating local adaptation pooling from a local adaptation kernel and the glare; calculating an adjusted cone response; calculating a target luminance from the adjusted cone response; and generating an adjusted image by subtracting the glare from the target luminance.

Details of one or more implementations of the subject matter described in this specification are set forth in the accompanying drawings and the description below. Other features, aspects, and advantages will become apparent from the description, the drawings, and the claims. Note that the relative dimensions of the following figures may not be drawn to scale. Like reference numbers and designations in the various drawings generally indicate like elements, but different reference numbers do not necessarily designate different elements between different drawings.

BRIEF DESCRIPTION OF DRAWINGS

FIG. 1 illustrates an example graph showing point spread function (vertical) in terms of visual angle (horizontal, in degrees).

FIG. 2 illustrates an example graph of local adaptation pooling curves for an eye.

FIG. 3 illustrates an example graph of cone response curves.

FIG. 4 illustrates an example method for determining a delta cone response.

FIG. 5 illustrates an example method for adjusting an image to compensate for non-ideal conditions.

FIG. 6 illustrates an example process for local ambient compensation.

FIG. 7 illustrates example hardware for the methods described herein.

FIG. 8 illustrates an example decoder implementing the methods described herein.

DETAILED DESCRIPTION

As used herein, "point spread function" or "PSF" refers to a mathematical model that describes the response of an eye to a point source of illumination. The term "PH" refers to a distance to a screen or projection in terms of multiples of the screen/projection height.

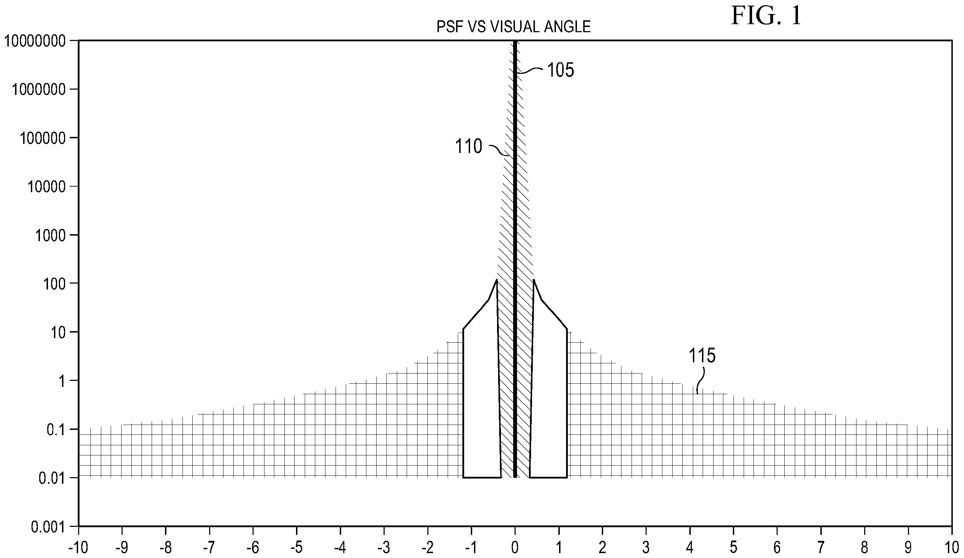

FIG. 1 shows an example graph of the point spread function (PSF) values vs visual angle (degrees) for a normal human eye. At +/- 0.02° (105), the visual acuity is at a maximum. From about 0.06° to 0.33° (110), users still have contrast sensitivity. The acuity drops off sharply in "straylight" angles, from around 1° to 30° (115). These values differ from person to person, and can change over time as the person ages.

As used herein, "adaptation" refers to the retina adapting to changing luminance levels. "Local adaptation pooling" refers to a model of per-pixel (or pixel block) adaptation based on spatial pooling (feature reduction by filtering over a region of field view). See, e.g., "A Model of Local Adaptation", by Peter Vangorp et al. (ACM TOG 34(6)).

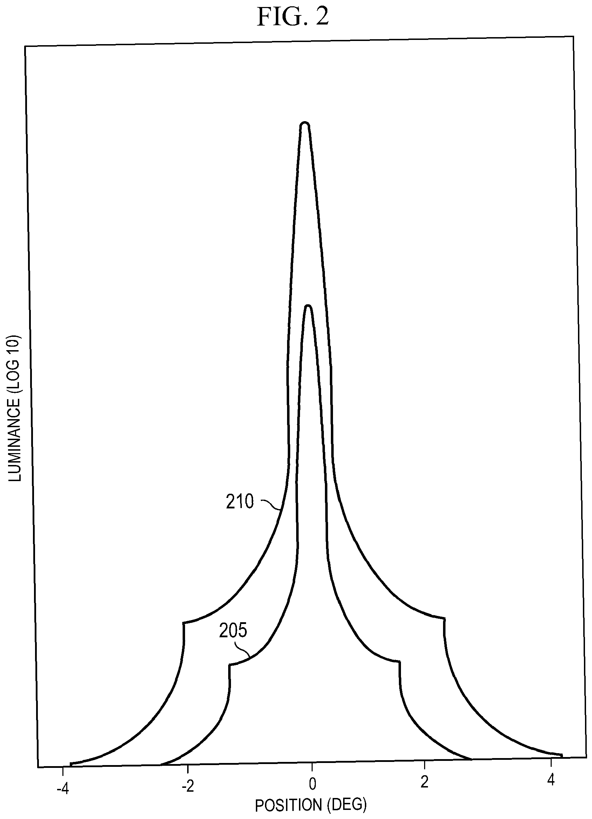

FIG. 2 shows an example graph of local adaptation pooling curves, one for a brighter source (210) and one for a darker source (205). Once light falls on the retina, each cone doesn't locally adapt. There's a system of local pooling that accounts for neighborhoods. The pooling occurs mostly over a 4-degree area, with the most important adaptation occurring over the middle one degree. The best model can be expressed as

$$L_a = \alpha n_1^{-1}(n_1)(L_O) * g_{\sigma 1}) + (1 - \alpha)n_2^{-1}(n_2(L_O) * g_{\sigma 2}) \qquad (1)$$

where, in some embodiments, $\alpha$=0.654, * is the convolution operator, and the parameters for the Gaussian kernels g are $\sigma_1$ = 0.428 deg and $\sigma_2$ = 0.0824 deg. The $n_1$ and $n_2$ values are custom non-linearities which can be approximated with

$$n(L_O) = a \frac{L_O^c}{b + L_O^d} \qquad (2)$$

where, in some embodiments, for $n_1$, a= 3.46, b=70.2, c=2.38, and d=2.37, and for $n_2$, a= 2.19, b=66.8, c=2.37, and d=2.37.

Other values for the adaptation pooling curves can be derived under different conditions. See e.g. "A Model of Local Adaptation", *supra.* Typically, the functional form is steeper in the first few degrees off zero, then sloping off less steeply further from the zero mark (see e.g., FIG. 2).

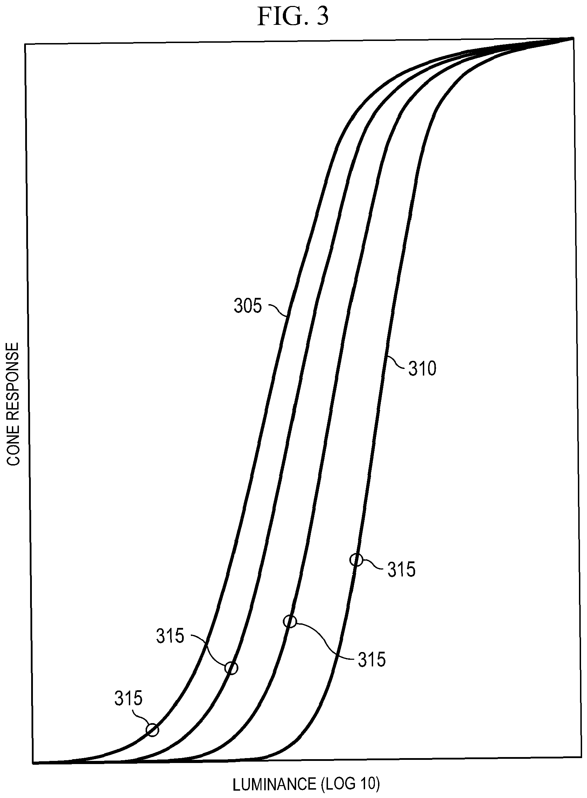

FIG. 3 shows an example of cone response curves, with response curves at lower luminance (305) and higher luminance (310) and corresponding adaptation levels (315).

In the method, an image is brightness compensated by maintaining the cone response difference between the image and "black". To do this, the cone response difference is first calculated for ideal conditions, then used to adjust luminance levels under actual conditions.

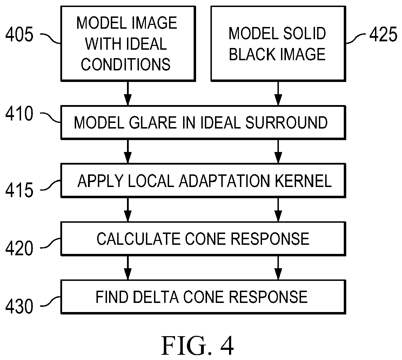

In some embodiments, the cone response difference (or "cone delta") can be determined by the following steps, as shown in FIG. 4.

1) Model the image with ideal surround conditions (405):

$$Sur_R = image + ideal\ conditions \qquad (3)$$

An example of ideal surround conditions may be 5 cd/m^2 at a distance of 3x picture height. However, the ideal surround conditions can change depending on application (e.g., in-theater movie vs. at-home streaming vs. mobile device, etc.).

2) Model the glare being added to the image (with ideal surround) based on ideal optics for a human eye (e.g., healthy eyes of a 20-year-old person) (410). The modelling can be done by using the inverse fast Fourier transform function of the product of a point spread function ("PSF()") of the ideal eye ("eye") with a fast Fourier transform function of the image with ideal surround. This model can be referred to as the "retinal image" ("$Ret_R$").

$$Ret_R = ifft\big(PSF(eye) \times fft(Sur_R)\big) \qquad (4)$$

3) The local adaptation pooling ("$La_R$") can then be calculated by applying a local adaptation kernel ("$\partial$") to the rental image (415).

$$La_R = \partial * Ret_R \qquad (5)$$

The local adaptation kernel can be a convolution kernel based on pooling curves (see FIG. 2). Example kernel sizes are 10x10 and 50x50, but other kernel sizes can be used.

4) From these, the cone response ("$C_R$") of the ideal eye under ideal conditions can be calculated (420).

$$C_R = \frac{Ret_R{}^n}{Ret_R{}^n + \sigma(La_R)^n} \qquad (6)$$

Where n is a response constant and $\sigma()$ is the adaptation state that is reached at complete adaptation. An example range of values of $n$ is from 0.7 to 1.

5) Steps 1-4 are repeated for a solid black background ("$S$") in place of the image. This provides a cone response for glare separated from image content (425).

$$Sur_S = black + ideal\ conditions \qquad (7)$$

$$Ret_S = ifft\big(PSF(eye) \times fft(Sur_S)\big) \qquad (8)$$

$$La_S = \partial * Ret_S \qquad (9)$$

$$C_S = \frac{Ret_S{}^n}{Ret_S{}^n + \sigma(La_S)^n} \qquad (10)$$

"Black" is defined as the light/glare in your eye at that pixel location given a black (zero luminance) image, but still in the given surround condition.

6) From these cone responses, the delta cone response ("$\Delta_c$") can be determined (430).

$$\Delta_C = C_R - C_S \qquad (11)$$

From this delta cone response, the luminance of an actual displayed image can be adjusted for glare.

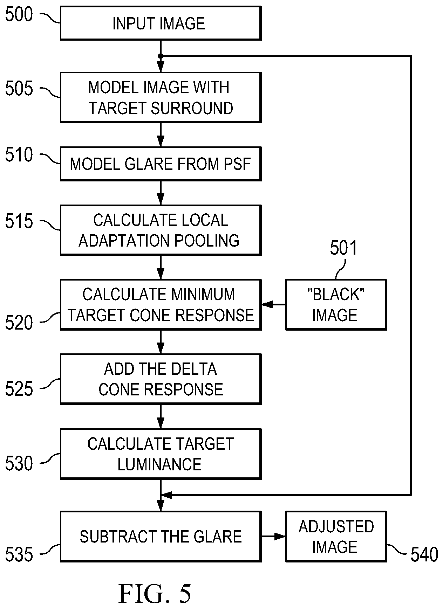

In some embodiments, the image can be adjusted with the following steps, as shown in FIG. 5:

1) Model the actual (i.e., target, "$T$") surround with the target image (500) ("$Sur_T$") (505). At a simplistic level this would include parameters such as the type of screen the user is looking at, the viewing angle between the user and the screen, the user's distance to the screen, and a flat field description of the ambient luminance conditions. Multiple parameters can be considered together. Basically, the parameters describe ways that the target image might be altered/warped from the creator's intended viewing presentation. For example, changing the distance to the screen would make the viewed images appear smaller and different screens have different glare/reflection characteristics. At a complex level this could include parameterized physical capture of the complex surround (e.g., visual scan of surround).

$$Sur_T = image + actual\ conditions \qquad (12)$$

"Actual conditions" can be, for example, physically measured values, or they can be assumed values from predicted conditions, or even a mix of both.

2) Model the glare being added to the image by the optics of the user's eye (this would change from person to person). (510) This is the point spread function, "PSF", of the eye, as described above. Attenuate it if needed by the pupil's diameter. This is now the target retinal image ($"Ret_T"$).

$$Ret_T = ifft(PSF(eye) \times fft(Sur_T)) \qquad (13)$$

For example, and in simplistic terms, a smaller pupil diameter decreases the Nyquist threshold and will result in a smaller/narrower PSF and, likewise, a larger pupil diameter the opposite. In some embodiments PSF can be given as a gaussian:

$$PSF = e^{\left(-x^2/(2(s+p)^2)\right)} \qquad (13.1)$$

Where $x$ is the angle, s is a constant standard deviation, and $p$ is the pupil diameter.

3) Given the target retinal image and the local adaptation kernel, calculate local adaptation pooling (515). This will provide, for every pixel, the target local adaptation.

$$La_T = \partial * Ret_T \qquad (14)$$

4) From the target local adaptation and the retinal image for a "black" image (501) and actual surround conditions, calculate the minimum target cone response ($"C_{Tmin}"$) of the user's eye under these conditions (520).

$$Sur_{TB} = black + actual\ conditions \qquad (15)$$

$$Ret_{TB} = ifft(PSF(eye) \times fft(Sur_{TB})) \qquad (16)$$

$$C_{Tmin} = \frac{Ret_{TB}{}^n}{Ret_{TB}{}^n + \sigma(La_T)^n} \qquad (17)$$

5) Now add the delta cone response (calculated from ideal conditions) to the minimum target cone response to get an adjusted cone response ($"C_T"$) (525).

$$C_T = C_{Tmin} + \Delta_C \qquad (18)$$

6) From this, we can calculate our target luminance (530). This is local luminance (e.g., per pixel).

$$\sigma = 12.6\ La_T{}^{0.63} \qquad (19)$$

$$L_T = \left(\frac{c_T \sigma^n}{1 - c_T}\right)^{\frac{1}{n}} \qquad (20)$$

7) Now subtract the luminance from glare from the target luminance (535) to produce the adjusted (luminance) image (*"Image_T"*) (540) from the input image (500).

$$Image_T = L_T - Ret_T \qquad (21)$$

The process itself does not assume target display characteristics. Therefore, it is possible that the compensated image created may exceed the capabilities of the target display. In some embodiments, traditional tone mapping algorithms are employed to return the image into the range of the target display if it is detected that the compensated image exceeds the capabilities of the target display.

While this method targets maintaining delta cone response of the eye, it is possible to also target absolute cone response. This will be effective when the image covers majority of the field of view. For surround conditions that cannot be changed, that will physically limit the extent to which the absolute cone responses may be reached. In the case of high ambient, for example, getting a cone response near zero is unlikely no matter what is done to the image characteristics.

In some embodiments, $C_T$ in equation (18) is set as an absolute cone response value, instead of calculated from a sum.

Example Process

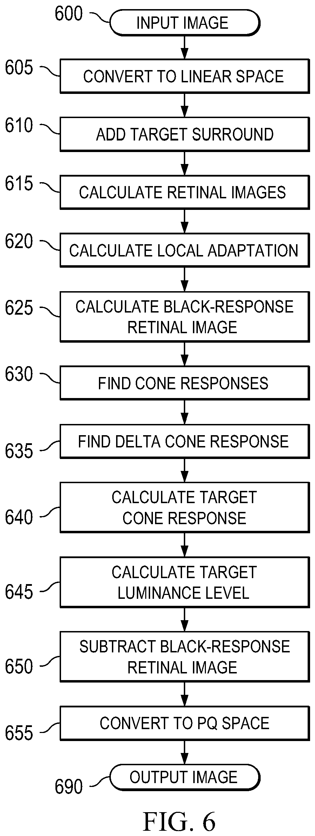

FIG. 6 shows a flowchart of an example of the process of local ambient compensation.

1) From the source image (600), convert the image from PQ (perceptible quantization) space to linear space (luminance). (605)
Example pseudocode is *Lin_src = PQ2L(Img_src).*

2) Add the target surround (ambient conditions) and add padding to simulate differences in viewing angles. (610) This can be accomplished by filter design.
An example of simulating surround environment is creating an image with a particular display ("TV") in a target surround environment by taking the image and padding it with surround values. If the viewer is at a smaller viewing angle (further from the TV), decrease the size of the image in relation to the surround. Likewise, if the viewing angle is smaller, increase the size of the image in relation to the padding. In both cases one can simply adjust the amount of padding to reach appropriate viewing angles. For example, at 3 picture heights, the TV should take up approximately 40 degrees out of the 180-degree image.
Examples for source vs. target conditions includes a source at 5 nit surround at 3 PH viewing distance, and a target at 300 nit surround at 6 PH distance (e.g. the actual viewing conditions has greater ambient lighting and a smaller screen than the source was designed for).

3) For each viewing condition of the source and target, calculate the retinal images (taking into account glare, straylight, point spread function) stripping away any padding. (615)
Example pseudocode is: Ret_src = calculateGlare(Lin_src, Source); Ret_tgt = calculateGlare(Lin_src, Target).

4) For each retinal image (source and target), calculate the local adaptation. (620)
Example pseudocode is: La_src = calculateAdaptation(Ret_src); La_tgt = cal cul ate Adaptati on(Ret_tgt).

5) For each surround condition (source and target), calculate the retinal images for a black image. (625)
Example pseudocode is: Ret_srcBlack = calculateGlare(black, Source); Ret_tgtBlack = calculateGlare(black, Target).

6) For the source and target images, find the cone responses. The cone responses from the black images are considered "minimum black due to glare". (630)
Example pseudocode is: ConeResp_src = getConeResponse(Ret_src, La_src); ConeResp_srcblk = getConeResponse(Ret_srcBlack, La src); ConeResp_tgtblk = getConeResponse(Ret_srcBlack, La_tgt).

7) Find the delta cone response as the difference between the image cone response and the "minimum black due to glare" cone response for the source. (635)
Example pseudocode is: deltaConeResp = ConeResp_src - ConeResp_srcblk.

8) Calculate the target cone response as the sum of the target black response plus the delta cone response. (640)
Example pseudocode is: ConeResp_tgt = ConeResp_tgtblk + deltaConeResp.

9) Use the local adaptation model of the target image to drive the next step. Take this local adaptation model, the desired cone response, and back-calculate to get the required luminance level. While this is technically a circular relationship, the local adaptation of the target is a close enough approximation to adjust the image sufficiently. (645)
Example pseudocode is: Lin_tgt = getLuminance(ConeResp_tgt, La_tgt).

10) Subtract the retinal image (target) for black to remove the straylight from the surround and provide the correct contrast ratio. (650)
Example pseudocode is: Lin_tgt_noGlare = Lin_tgt - Ret_tgtBlack.

11) Convert the image back from linear space to display space (PQ) if needed (655) to provide the adapted image (690).
Example pseudocode is: Img_tgt = L2PQ(Lin_tgt_noGlare).

Conclusion

In this document is proposed a local adaptation pooling method/system to modify an image for display under non-ideal conditions. The method/system can include determining a delta cone response under ideal conditions to be used to adjust images shown in non-ideal conditions.

Example Computer System Implementation

Embodiments of the present invention may be implemented with a computer system, systems configured in electronic circuitry and components, an integrated circuit (IC) device such as a microcontroller, a field programmable gate array (FPGA), or another configurable or programmable logic device (PLD), a discrete time or digital signal processor (DSP), an application specific IC (ASIC), and/or apparatus that includes one or more of such systems, devices or components. The computer and/or IC may perform, control, or execute instructions relating to the adaptive perceptual quantization of images with enhanced dynamic range, such as those described herein. The computer and/or IC may compute any of a variety of parameters or values that relate to the adaptive perceptual quantization processes described herein. The image and video embodiments may be implemented in hardware, software, firmware and various combinations thereof.
Certain implementations of the inventio comprise computer processors which execute software instructions which cause the processors to perform a method of the disclosure. For example, one or more processors in a display, an encoder, a set top box, a transcoder or the like may implement methods related to adaptive perceptual quantization of HDR images as described above by executing software instructions in a program memory accessible to the processors. Embodiments of the invention may also be provided in the form of a program product. The program product may comprise any non-transitory medium which carries a set of computer-readable signals comprising instructions which, when executed by a data processor, cause the data processor to execute a method of an embodiment of the invention. Program products according to embodiments of the invention may be in any of a wide variety of forms. The program product may comprise, for example, physical media such as magnetic data storage media including floppy diskettes, hard disk drives, optical data storage media including CD ROMs, DVDs, electronic data storage media including ROMs, flash RAM, or the like. The computer-readable signals on the program product may optionally be compressed or encrypted.
Where a component (e.g. a software module, processor, assembly, device, circuit, etc.) is referred to above, unless otherwise indicated, reference to that component (including a reference to a "means") should be interpreted as including as equivalents of that component any component which performs the function of the described component (e.g., that is functionally equivalent), including components which are not structurally equivalent to the disclosed structure which performs the function in the illustrated example embodiments of the invention.
According to one embodiment, the techniques described herein are implemented by one or more special-purpose computing devices. The special-purpose computing devices may be hard-wired to perform the techniques or may include digital electronic devices such as one or more application-specific integrated circuits (ASICs) or field programmable gate arrays (FPGAs) that are persistently programmed to perform the techniques or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

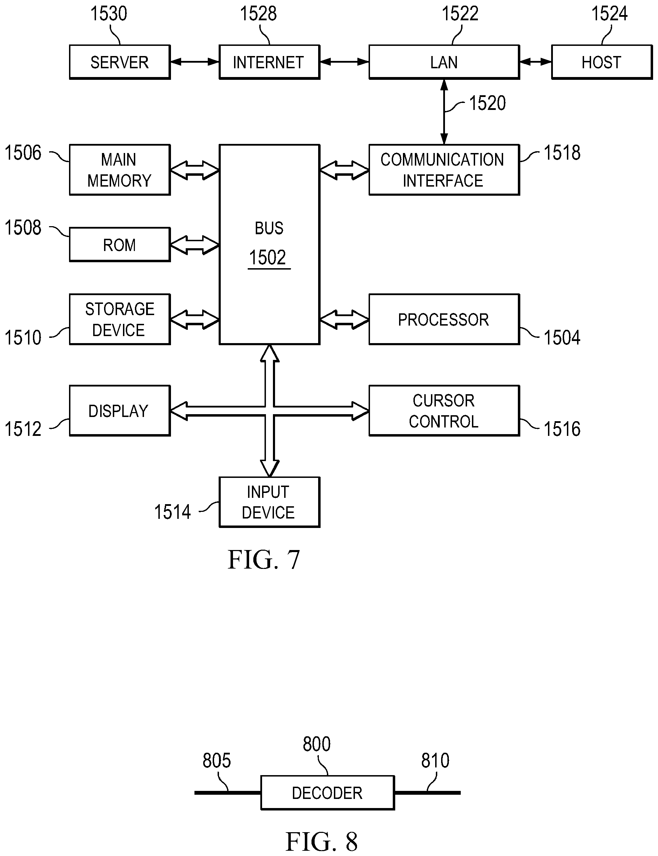

For example, FIG. 7 is a block diagram that illustrates a computer system (1500) upon which an embodiment of the invention may be implemented. Computer system (1500) includes a bus (1502) or other communication mechanism for communicating information, and a hardware processor (1504) coupled with bus (1502) for processing information. A hardware processor (1504) may be, for example, a general-purpose microprocessor.

The computer system (1500) also includes a main memory (1506), such as a random-access memory (RAM) or other dynamic storage device, coupled to bus (1502) for storing information and instructions to be executed by processor (1504). Main memory (1506) also may be used for storing temporary variables or other intermediate information during execution of instructions to be executed by processor (1504). Such instructions, when stored in non-transitory storage media accessible to processor (1504), render computer system (1500) into a special-purpose machine that is customized to perform the operations specified in the instructions.

Computer system (1500) further includes a read only memory (ROM) (1508) or other static storage device coupled to bus (1502) for storing static information and instructions for processor (1504). A storage device (1510), such as a magnetic disk or optical disk, is provided and coupled to bus (1502) for storing information and instructions.

Computer system (1500) may be coupled via bus (1502) to a display (1512), such as a liquid crystal display (LCD) or light emitting diode display (LED), for displaying information to a computer user. An input device (1514), including alphanumeric and other keys, is coupled to bus (1502) for communicating information and command selections to processor (1504). Another type of user input device is cursor control (1516), such as a mouse, a trackball, or cursor direction keys for communicating direction information and command selections to processor (1504) and for controlling cursor movement on display (1512). This input device typically has two degrees of freedom in two axes, a first axis (e.g., x) and a second axis (e.g., y), that allows the device to specify positions in a plane.

Computer system (1500) may implement the techniques described herein using customized hard-wired logic, one or more ASICs or FPGAs, firmware and/or program logic which in combination with the computer system causes or programs computer system (1500) to be a special-purpose machine. According to one embodiment, the techniques as described herein are performed by computer system (1500) in response to processor (1504) executing one or more sequences of one or more instructions contained in main memory (1506). Such instructions may be read into main memory (1506) from another storage medium, such as storage device (1510). Execution of the sequences of instructions contained in main memory (1506) causes processor (1504) to perform the process steps described herein. In alternative embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage device (1510). Volatile media includes dynamic memory, such as main memory (1506). Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus (1502). Transmission media can also take the form of acoustic or light waves, such as those generated during radio-wave and infra-red data communications.

Various forms of media may be involved in carrying one or more sequences of one or more instructions to processor (1504) for execution. For example, the instructions may initially be carried on a magnetic disk or solid-state drive of a remote computer. The remote computer can load the instructions into its dynamic memory and send the instructions over a telephone line using a modem. A modem local to computer system (1500) can receive the data on the telephone line and use an infra-red transmitter to convert the data to an infra-red signal. An infra-red detector can receive the data carried in the infra-red signal and appropriate circuitry can place the data on bus (1502). Bus (1502) carries the data to main memory (1506), from which processor (1504) retrieves and executes the instructions. The instructions received by main memory (1506) may optionally be stored on storage device (1510) either before or after execution by processor (1504).

Computer system (1500) also includes a communication interface (1518) coupled to bus (1502). Communication interface (1518) provides a two-way data communication coupling to a network link (1520) that is connected to a local network (1522). For example, communication interface (1518) may be an integrated services digital network (ISDN) card, cable modem, satellite modem, or a modem to provide a data communication connection to a corresponding type of telephone line. As another example, communication interface (1518) may be a local area network (LAN) card to provide a data communication connection to a compatible LAN. Wireless links may also be implemented. In any such implementation, communication interface (1518) sends and receives electrical, electromagnetic or optical signals that carry digital data streams representing various types of information.

Network link (1520) typically provides data communication through one or more networks to other data devices. For example, network link (1520) may provide a connection through local network (1522) to a host computer (1524) or to data equipment operated by an Internet Service Provider (ISP). ISP in turn provides data communication services through the worldwide packet data communication network now commonly referred to as the "Internet" (1528). Local network (1522) and Internet (1528) both use electrical, electromagnetic or optical signals that carry digital data streams. The signals through the various networks and the signals on network link 920 and through communication interface (1518), which carry the digital data to and from computer system (1500), are example forms of transmission media.

Computer system (1500) can send messages and receive data, including program code, through the network(s), network link (1520) and communication interface (1518). In the Internet example, a server (1530) might transmit a requested code for an application program through Internet (1528), ISP on the Internet, local network (1522) and communication interface (1518).

The received code may be executed by processor (1504) as it is received, and/or stored in storage device (1510), or other non-volatile storage for later execution.

The methods herein can also be implemented on a decoder in the device, as shown in FIG. 8. The decoder (800) has an input (805) for the input images and an output (810) for the adapted images for further processing or display.

A number of embodiments of the disclosure have been described. Nevertheless, it will be understood that various modifications may be made without departing from the spirit and scope of the present disclosure. Accordingly, other embodiments are within the scope of the following claims.

The examples set forth above are provided to those of ordinary skill in the art as a complete disclosure and description of how to make and use the embodiments of the disclosure, and are not intended to limit the scope of what the inventor/inventors regard as their disclosure.

Modifications of the above-described modes for carrying out the methods and systems herein disclosed that are obvious to persons of skill in the art are intended to be within the scope of the following claims. All patents and publications mentioned in the specification are indicative of the levels of skill of those skilled in the art to which the disclosure pertains. All references cited in this disclosure are incorporated by reference to the same extent as if each reference had been incorporated by reference in its entirety individually.

It is to be understood that the disclosure is not limited to particular methods or systems, which can, of course, vary. It is also to be understood that the terminology used herein is for the purpose of describing particular embodiments only, and is not intended to be limiting. As used in this specification and the appended claims, the singular forms "a," "an," and "the" include plural referents unless the content clearly dictates otherwise. The term "plurality" includes two or more referents unless the content clearly dictates otherwise. Unless defined otherwise, all technical and scientific terms used herein have the same meaning as commonly understood by one of ordinary skill in the art to which the disclosure pertains.

Various aspects of the present invention may be appreciated from the following Enumerated Example Embodiments (EEEs):

EEE1. A method to modify an image displayed for a user on a target device in target surround conditions, said method comprising:

> determining an adjusted cone response based on a minimum target cone response and a delta cone response;
> calculating a target luminance from a local adaptation pooling and the adjusted cone response; and
> modifying the image by the target luminance to produce an adapted image.

EEE2. The method of EEE1, further comprising:
calculating the minimum target cone response from a local adaptation pooling and a target retinal image.

EEE3. The method of EEE2, further comprising:
calculating the local adaptation pooling based on a local adaptation kernel and the target retinal image.

EEE4. The method of EEE3, further comprising:
determining the target retinal image from a target surround image and a point spread function of an eye of the user.

EEE5. The method of EEE4, further comprising:
modeling the target surround image as the target device with a black screen and with target surround conditions.

EEE6. The method of any of EEE1 to EEE5, further comprising:
subtracting the target retinal image from the adapted image.

EEE7. The method of any of EEE1 to EEE6, wherein the image is an image of a video.

EEE8. The method of any of EEE1 to EEE7, wherein the device is any of a movie projector, television, computer monitor, smartphone, or tablet computer.

EEE9. The method of any of EEE3 to EEE8, wherein the local adaptation kernel is a convolution kernel based on pooling curves.

EEE10. The method of any of EEE3 to EEE9, wherein the local adaptation kernel is a 10x10 kernel.

EEE11. The method of any of EEE1 to EEE10, wherein the target surround conditions include two or more of: the type of screen the user is looking at, the viewing angle between the user and the screen, the distance from the user to the screen, and a flat field description of the ambient luminance conditions.

EEE12. A method for adjusting a target image to be viewed by a user comprising:

modeling a target surround with the target image;
modeling glare being added to the target image by a point spread function of an eye of the user;
calculating local adaptation pooling from a local adaptation kernel and the glare;
calculating an adjusted cone response;
calculating a target luminance from the adjusted cone response; and
generating an adjusted image by subtracting the glare from the target luminance.

EEE13. The method of EEE12, further comprising calculating a minimum target cone response from the local adaptation pooling and a retinal image for a black image under the target surround; wherein the adjusted cone response is calculated as a sum of the minimum target cone response and a delta cone response, the delta cone response being calculated from ideal conditions.

EEE14. The method of EEE12, wherein the adjusted cone response is calculated as an absolute cone response value.

EEE15. A decoder comprising:

an image data input;
an adapted image data output;
wherein the decoder is configured to perform the method of any of EEE1 to EEE14.

EEE16. A device comprising:

a processor;
a memory;
wherein the memory contains code enabling the processor to perform the method of any of EEE 1 to EEE14.

EEE17. A non-transient computer readable media containing code that, when read by a computer, performs the method of any of EEE1 to EEE14.

**Claims**

1. A method to modify an image displayed for a user on a target device in target surround conditions, said method comprising:

   determining an adjusted cone response based on a minimum target cone response and a delta cone response;
   calculating a target luminance from a local adaptation pooling and the adjusted cone response; and
   modifying the image by the target luminance to produce an adapted image.

2. The method of claim 1, further comprising:
   calculating the minimum target cone response from a local adaptation pooling and a target retinal image.

3. The method of claim 2, further comprising:

calculating the local adaptation pooling based on a local adaptation kernel and the target retinal image.

4. The method of claim 3, further comprising:
determining the target retinal image from a target surround image and a point spread function of an eye of the user.

5. The method of claim 4, further comprising:
modeling the target surround image as the target device with a black screen and with target surround conditions.

6. The method of any of claims 1-5, further comprising:
subtracting the target retinal image from the adapted image.

7. The method of any of claims 1-6, wherein the image is an image of a video.

8. The method of any of claims 1-7, wherein the device is any of a movie projector, television, computer monitor, smartphone, or tablet computer.

9. The method of any of claims 3-8 when being dependent on claim 3, wherein the local adaptation kernel is a convolution kernel based on pooling curves.

10. The method of any of claims 3-9 when being dependent on claim 3, wherein the local adaptation kernel is a 10x10 kernel.

11. The method of any of claims 1-10, wherein the target surround conditions include two or more of: the type of screen the user is looking at, the viewing angle between the user and the screen, the distance from the user to the screen, and a flat field description of the ambient luminance conditions.

12. A method for adjusting a target image to be viewed by a user comprising:

modeling a target surround with the target image;
modeling glare being added to the target image by a point spread function of an eye of the user;
calculating local adaptation pooling from a local adaptation kernel and the glare;
calculating an adjusted cone response;
calculating a target luminance from the adjusted cone response; and
generating an adjusted image by subtracting the glare from the target luminance.

13. The method of claim 12, further comprising calculating a minimum target cone response from the local adaptation pooling and a retinal image for a black image under the target surround; wherein the adjusted cone response is calculated as a sum of the minimum target cone response and a delta cone response, the delta cone response being calculated from ideal conditions.

14. The method of claim 12, wherein the adjusted cone response is calculated as an absolute cone response value.

15. A decoder comprising:

an image data input;
an adapted image data output;
wherein the decoder is configured to perform the method of any of claims 1-14.

FIG. 1

PSF VS VISUAL ANGLE

EP 4 535 281 A1

# FIG. 2

## FIG. 3

405 — MODEL IMAGE WITH IDEAL CONDITIONS

425 — MODEL SOLID BLACK IMAGE

410 — MODEL GLARE IN IDEAL SURROUND

415 — APPLY LOCAL ADAPTATION KERNEL

420 — CALCULATE CONE RESPONSE

430 — FIND DELTA CONE RESPONSE

FIG. 4

500 — INPUT IMAGE

505 — MODEL IMAGE WITH TARGET SURROUND

510 — MODEL GLARE FROM PSF

515 — CALCULATE LOCAL ADAPTATION POOLING

520 — CALCULATE MINIMUM TARGET CONE RESPONSE ← 501 — "BLACK" IMAGE

525 — ADD THE DELTA CONE RESPONSE

530 — CALCULATE TARGET LUMINANCE

535 — SUBTRACT THE GLARE → ADJUSTED IMAGE — 540

FIG. 5

600 — ( INPUT IMAGE )

605 — CONVERT TO LINEAR SPACE

610 — ADD TARGET SURROUND

615 — CALCULATE RETINAL IMAGES

620 — CALCULATE LOCAL ADAPTATION

625 — CALCULATE BLACK-RESPONSE RETINAL IMAGE

630 — FIND CONE RESPONSES

635 — FIND DELTA CONE RESPONSE

640 — CALCULATE TARGET CONE RESPONSE

645 — CALCULATE TARGET LUMINANCE LEVEL

650 — SUBTRACT BLACK-RESPONSE RETINAL IMAGE

655 — CONVERT TO PQ SPACE

690 — ( OUTPUT IMAGE )

FIG. 6

1530      1528      1522      1524

| SERVER | ⟷ | INTERNET | ⟷ | LAN | ⟷ | HOST |

1520

1506 — MAIN MEMORY ⟷

1518 — COMMUNICATION INTERFACE

1508 — ROM ⟷

BUS 1502

1510 — STORAGE DEVICE ⟷

PROCESSOR — 1504

1512 — DISPLAY ⟷

CURSOR CONTROL — 1516

1514 — INPUT DEVICE

## FIG. 7

800

805          810

| DECODER |

## FIG. 8

| | Europäisches Patentamt European Patent Office Office européen des brevets | **EUROPEAN SEARCH REPORT** | Application Number EP 23 20 7885 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/375378 A1 (KUNKEL TIMO [US]) 24 November 2022 (2022-11-24) * the whole document * | 1-15 | INV. G06T5/94 H04N1/60 G09G5/10 |
| A | US 2012/182278 A1 (BALLESTAD ANDERS [CA]) 19 July 2012 (2012-07-19) * the whole document * | 1-15 | |
| A | US 9 224 363 B2 (BALLESTAD ANDERS [CA]; KOSTIN ANDREY [US] ET AL.) 29 December 2015 (2015-12-29) * the whole document * | 1-15 | |

| | TECHNICAL FIELDS SEARCHED (IPC) |
|---|---|
| | G06T H04N G09G |

The present search report has been drawn up for all claims

| Place of search | Date of completion of the search | Examiner |
|---|---|---|
| The Hague | 22 March 2024 | Fanning, Neil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 7885

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2024

| Patent document cited in search report | | | Publication date | Patent family member(s) | | Publication date |
|---|---|---|---|---|---|---|
| US 2022375378 | A1 | | 24-11-2022 | CN 114365077 | A | 15-04-2022 |
| | | | | EP 4025990 | A1 | 13-07-2022 |
| | | | | JP 7439243 | B2 | 27-02-2024 |
| | | | | JP 2022546580 | A | 04-11-2022 |
| | | | | US 2022375378 | A1 | 24-11-2022 |
| | | | | WO 2021046242 | A1 | 11-03-2021 |
| US 2012182278 | A1 | | 19-07-2012 | US 2012182278 | A1 | 19-07-2012 |
| | | | | US 2015054807 | A1 | 26-02-2015 |
| US 9224363 | B2 | | 29-12-2015 | BR 112013023527 | A2 | 06-12-2016 |
| | | | | BR 122015005675 | A2 | 20-08-2019 |
| | | | | CN 103430527 | A | 04-12-2013 |
| | | | | CN 103763456 | A | 30-04-2014 |
| | | | | CN 105516541 | A | 20-04-2016 |
| | | | | CN 105744114 | A | 06-07-2016 |
| | | | | EP 2687005 | A1 | 22-01-2014 |
| | | | | EP 3340598 | A1 | 27-06-2018 |
| | | | | ES 2664508 | T3 | 19-04-2018 |
| | | | | ES 2816103 | T3 | 31-03-2021 |
| | | | | HK 1218198 | A1 | 03-02-2017 |
| | | | | JP 5770865 | B2 | 26-08-2015 |
| | | | | JP 5792369 | B2 | 14-10-2015 |
| | | | | JP 6085011 | B2 | 22-02-2017 |
| | | | | JP 6134755 | B2 | 24-05-2017 |
| | | | | JP 2014512740 | A | 22-05-2014 |
| | | | | JP 2015080216 | A | 23-04-2015 |
| | | | | JP 2015233286 | A | 24-12-2015 |
| | | | | JP 2015233323 | A | 24-12-2015 |
| | | | | KR 20130135315 | A | 10-12-2013 |
| | | | | KR 20140129377 | A | 06-11-2014 |
| | | | | KR 20150016332 | A | 11-02-2015 |
| | | | | PL 2687005 | T3 | 31-07-2018 |
| | | | | PL 3340598 | T3 | 30-11-2020 |
| | | | | PT 3340598 | T | 28-08-2020 |
| | | | | RU 2592074 | C1 | 20-07-2016 |
| | | | | RU 2013145821 | A | 20-04-2015 |
| | | | | RU 2014136061 | A | 10-12-2015 |
| | | | | TW 201304501 | A | 16-01-2013 |
| | | | | TW 201448563 | A | 16-12-2014 |
| | | | | US 8593480 | B1 | 26-11-2013 |
| | | | | US 2014002478 | A1 | 02-01-2014 |
| | | | | US 2016071484 | A1 | 10-03-2016 |
| | | | | US 2018182352 | A1 | 28-06-2018 |
| | | | | WO 2012125802 | A1 | 20-09-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63588077


**Non-patent literature cited in the description**

- **PETER VANGORP et al.** A Model of Local Adaptation. *ACM TOG*, vol. 34 (6)